# EUROPÄISCHE PATENTANMELDUNG

(11) **EP 1 881 246 A2**
(43) Veröffentlichungstag der Anmeldung: **23.01.2008**
(21) Anmeldenummer: 06014829.3
(22) Anmeldetag: 17.07.2006
(51) Int. Cl.: F16K 11/087, F16K 27/00, A01G 25/16

(54) **Verteiler zur Verteilung eines Fluides**

(71) Anmelder: MHA Zentgraf Merziger Hochdruck Armaturen GmbH & Co. KG, 66663 Merzig (DE)
(72) Erfinder: Neuwirth, Karl, 6073 Sistrans (AT); Kerber, Emil, 66663 Merzig (AT)
(74) Vertreter: Vièl, Georg

(57) **Zusammenfassung**

Die Erfindung betrifft einen Verteiler (1) zur Verteilung eines Fluides aus einer Rohrleitung zu mehreren Verbrauchern, wobei jedem Verbraucher ein Kugelhahn (3,4,5) mit einer in einem Gehäuse drehbar gelagerten Kugel (10) zugeordnet ist, die zur einen Seite hin eine segmentartige Aussparung (6) aufweist.

Die mit der Erfindung erziehlten Vorteile bestehen insbesondere darin, dass ein Verteiler (1) zur Verteilung eines Fluides aus einer Rohrleitung zu mehreren Verbrauchern in sehr kompakter Bauweise geschaffen wurde, was insbesondere dort zu Buche schlägt, wo extreme klimatische Verhältnisse herrschen. Das gilt beispielsweise für Beschneiungsanlagen in Wintersportgebieten. Auch kann der Verteiler (1) ohne weiters erweitert werden, wenn später mehr Verbraucher versorgt werden sollen als ursprünglich vorgesehen.

## Beschreibung

Die Erfindung betrifft einen Verteiler zur Verteilung eines Fluides aus einer Rohrleitung zu mehreren Verbrauchern, wobei jedem Verbraucher ein Kugelhahn mit einer in einem Gehäuse drehbar gelagerten Kugel zugeordnet ist, die zur einen Seite hin eine segmentartige Aussparung aufweist.

Zum Versorgen von mehreren Verbrauchern mit einem Fluid bei einer Zuführung ist es bekannt, zwischen diese Zuführung und die vor die Verbraucher geschalteten Kugelhähne eine Vorlage anzuordnen, über die alle, separat montierten Kugelhähne bzw. Verbraucher mit dem Fluid gespeist werden. Nachteilig dabei ist, dass die besagte Vorlage als separates Bauelement ausgebildet ist und deshalb viel Platz wegnimmt. Ein weiterer Nachteil ist, dass keine nachträgliche Erweiterung möglich ist, also im nachhinein mehr Verbraucher angeschlossen werden sollen als ursprünglich projektiert.

Die dabei eingesetzten Kugelhähne können bekanntermaßen zu einer Seite hin eine segmentartige Aussparung aufweisen.

Der Erfindung liegt die Aufgabe zugrunde, einen kompakten Verteiler zur Verteilung eines Fluides an mehrere Verbraucher zu schaffen, der leicht montierbar, wartungsarm und beliebig erweiterbar ist.

Diese Aufgabe wird erfindungsgemäß dadurch gelöst, dass zur Bildung eines im Verteiler verlaufenden fluidführenden Kanals die seitlich offenen Kugelhähne aneinander geflanscht sind und die segmentartige Aussparung so bemessen ist, dass sowohl der zugehörige Verbraucher als auch alle weiteren Kugelhähne mit angeschlossenen Verbrauchern mit Fluid beaufschlagt sind.

Nach der Erfindung ist auch vorgesehen, dass die Kugelhähne im geschlossenen Zustand einen dem Verbraucher zugeordnenten Entleerungskanal aufweisen.

Die mit der Erfindung erziehlten Vorteile bestehen insbesondere darin, dass ein Verteiler zur Verteilung eines Fluides aus einer Rohrleitung zu mehreren Verbrauchern in sehr kompakter Bauweise geschaffen wurde, was insbesondere dort zu Buche schlägt, wo extreme klimatische Verhältnisse herrschen. Das gilt beispielsweise für Beschneiungsanlagen in Wintersportgebieten. Auch kann der Verteiler ohne weiteres erweitert werden, wenn später mehr Verbraucher versorgt werden sollen als ursprünglich vorgesehen.

Die Erfindung wird an Hand der Zeichnungen näher beschrieben. Es zeigen:
Fig. 1 einen erfindungsgemäßen Verteiler,
Fig. 2 einen einzelnen Kugelhahn im Schnitt,
Fig. 3 diesen Kugelhahn in Seitenansicht und
Fig. 4 die Draufsicht dazu.

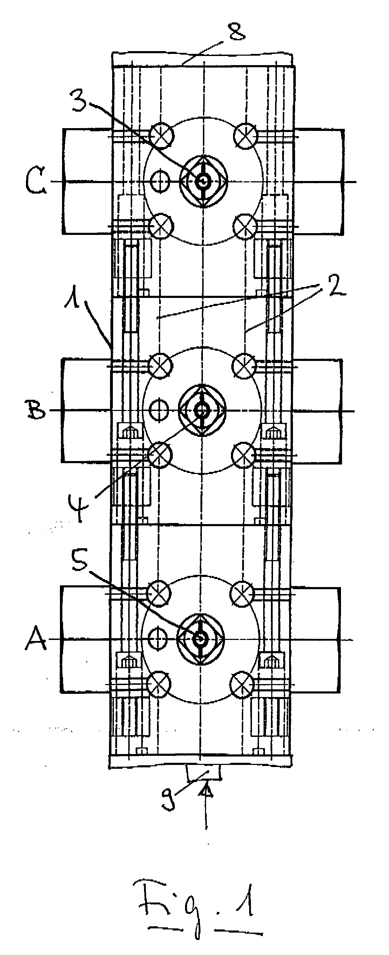

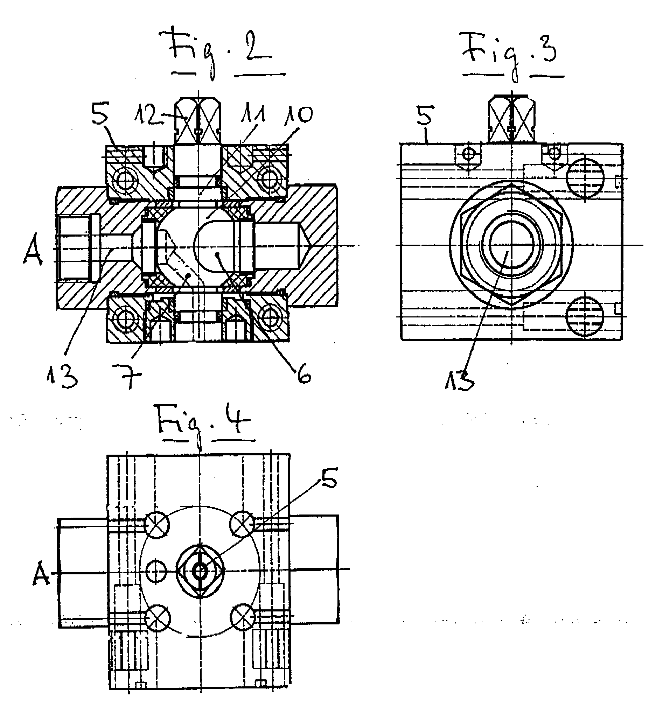

In Figur 1 weist der Verteiler 1 drei Kugelhähne 3, 4 und 5 auf. Es könnten auch mehr Kugelhähne montiert sein. Die seitlich offenen Kugelhähne 3, 4 und 5 sind aneinander geflanscht, so dass im Inneren des Verteilers 1 ein fluidführender Kanal 2 entsteht. Im gezeigten Beispiel, bei drei Kugelhähnen 3, 4, 5, befände sich an dem Kugelhahn 3 eine Abdeckung 8 und an dem Kugelhahn 5 eine Zuführung 9 für den Anschluss der Rohrleitung mit dem Fluid. Die Kugelhähne, wie die Figur 2 zeigt, haben eine segmentartige Aussparung 6. So ergibt sich die Möglichkeit sowohl dem zugehörigen Verbraucher A als auch alle weiteren Kugelhähne 4,3 mit angeschlossenen Verbrauchern B und C mit Fluid zu beaufschlagen.

Die entscheidenen Vorteile gegenüber dem Bekannten sind der im Verteiler 1 liegende fluidführende Kanal 2 und die durch die modulartige Anordnung der einzelnen Kugelhähne 3, 4 und 5 beliebige nachträgliche Erweiterbarkeit des Verteilers 1. Der in den Figuren 2, 3 und 4 dargestellte Kugelhahn 5 weist ein Küken 11 mit drehbar gelagerter Kugel 10 auf, die eine segmentartige Aussparung 6 hat. Die Drehung des Kükens 11 kann über den Vierkant 12. manuell oder beispielsweise elektrisch erfolgen (nicht näher dargestellt).

In der Darstellung gemäß Figur 2 ist der Auslass zu dem Verbraucher A geschlossen. Wird das Küken 11 um 180° gedreht, dann befindet sich die segmentartige Aussparung 6 vor dem Auslass 13 zu dem Verbraucher A. Das zu verteilende Fluid kann dann ungehindert sowohl zu dem Verbraucher A fließen als auch, bedingt durch die segmentartige Aussparung 6 zu weiteren Kugelhähnen 4, 3 bzw. Verbrauchern B, C.

Damit Fluid nach Abschaltung eines Verbrauchers nicht in den Verbraucherleitungen bzw. dem Auslass 13 steht, haben die Kugelhähne 3, 4, 5 im geschlossenen Zustand, wie in Figur 2 dargestellt, einen dem Verbraucher zugeordneten Entleerungskanal 7, über den Reste des vorher zugeführten Fluids abfließen können. - Das hat insbesondere dann eine Bedeutung, wenn bei tiefen Temperaturen beispielsweise Wasser, einfrieren und einen Verbraucher damit beschädigen würde. Der Entleerungskanal 7 verläuft im Inneren des Kükens 11.

## Patentansprüche

1. Verteiler zur Verteilung eines Fluides aus einer Rohrleitung zu mehreren Verbrauchern, wobei jedem Verbraucher ein Kugelhahn mit einer in einem Gehäuse drehbar gelagerten Kugel zugeordnet ist, die zur einen Seite hin eine segmentartige Aussparung aufweist, **dadurch gekennzeichnet, dass** zur Bildung eines im Verteiler (1) verlaufenden fluidführenden Kanals (2) die seitlich offenen Kugelhähne (3, 4, 5) aneinander geflanscht sind und die segmentartige Aussparung (6) so bemessen ist, dass sowohl der zugehörige Verbraucher (A) als auch alle weiteren Kugelhähne (4, 3) mit angeschlossenen Verbrauchern (B, C) mit Fluid beaufschlagt sind.

2. Verteiler nach Anspruch 1, **dadurch gekennzeichnet, dass** die Kugelhähne (3, 4, 5) im geschlossenen Zustand einen dem Verbraucher zugeordnenten Entleerungskanal (7) aufweisen.
